# EUROPEAN PATENT APPLICATION

(11) **EP 1 568 763 A1**
(43) Date of publication of application: **31.08.2005**
(21) Application number: 03810658.9
(22) Date of filing: 07.11.2003
(51) Int. Cl.: C12C 7/04, C12G 3/02

(54) **PROCESS FOR PRODUCING FERMENTED DRINK**

(30) Priority: 07.11.2002 JP 2002324556
(71) Applicant: SUNTORY LIMITED, Osaka 530-8203 (JP)
(72) Inventor: NISHIDA, Yuji, Ibaraki-shi, Osaka 567-0806 (JP); MARUHASHI, Taichi, Tatebayashi-shi, Gunma 374-0057 (JP); FUJITA, Hiroki, Kawasaki-shi, Kanagawa 214-0011 (JP); FUKUI, Nobuyuki, Mishima-gun, Osaka 618-0014 (JP)
(74) Representative: Vossius & Partner
(86) International application number: PCT/JP2003/014210
(87) International publication number: WO 2004/041992

(57) **Abstract**

It is a common concern among beverages to avoid or prevent off-flavors (unpleasant smells) from developing during a yeast-based fermentation step. The present invention relates to low-alcohol beverages produced through a fermentation stopping process and provides a method for producing fermented beverages with less off-flavor and with an excellent aroma.

The L-methionine concentration and the free amino nitrogen level (FAN level) in wort are adjusted to reduce the hydrogen sulfide concentration and the T-VDK concentration, thus enabling the production of fermented beverages with less off-flavor, i.e., sulfur and diacetyl smells.

## Description

### TECHNICAL FIELD

The present invention relates to a method for producing fermented beverages. More specifically, the present invention relates to a method for producing fermented beverages through the step of stopping yeast-based fermentation in mid course, wherein the L-methionine concentration or the FAN level in wort is adjusted to prevent the development of off-flavors, i.e., sulfur and diacetyl smells.

### BACKGROUND ART

Among alcoholic drinks, those produced via a yeast-based fermentation step are called fermented beverages, including fruit liquors (e.g., wines), fermented malt beverages (e.g., beers, sparkling liquors), and Japanese rice wines. Although these fermented beverages are categorized according to the type of source material and the process used for production, there is a commonality in that they are produced via a yeast-based fermentation step. It is therefore a common concern among these beverages to avoid or prevent off-flavors (unpleasant smells) from developing during the yeast-based fermentation step.

Various types of off-flavors are known and a variety of means have been studied to solve the associated problems. For example, JP 58-155075 A teaches that the addition of yeast extract or the like allows reduction of a must smell in must wines. JP 07-303457 A teaches the use of a yeast strain modified to carry a structural gene(s) in preventing the generation of hydrogen sulfide in beers. It is also taught that the levels of malic acid and succinic acid, which affect the aroma of sparkling liquors, are controlled by adjusting the fermentation temperature or the amount of yeast added (JP 10-57044 A) or by varying the time of protein pause within a given range to control the level of free amino nitrogen generated in wort (JP 10-52251 A). Moreover, JP 61-58573 A addresses diacetyls generated in rapid production of alcoholic drinks and teaches a two-stage fermentation process whose second stage is conducted in such a manner as to avoid introducing excess yeast, thus reducing diacetyl levels.

As described above, it is a common concern among fermented beverages to prevent off-flavors from developing during a yeast-based fermentation step, but the type of off-flavor to be noted will vary depending on the type of alcoholic drink to be produced, the type of source material to be used or the process to be used for production.

In response to recent market expansion of low-alcohol products, a variety of low-alcohol fermented beverages have been marketed respectively for fruit liquors, Japanese rice wines and fermented malt beverages. For fermented malt beverages such as beers and sparkling liquors, low-alcohol products are also manufactured. Among them, fermented malt beverages containing less than 1% alcohol, which are outside the scope of alcoholic drinks under the Japanese Liquor Tax Law, are called low-alcohol beers (low-alcohol sparkling beverages) or non-alcoholic beers, and their markets tend to expand.

The following methods are known for production of low-alcohol beers: (1) removing alcohol from beer (e.g., the reverse osmosis membrane method, the distillation method); (2) using a particular type of yeast or microorganism; and (3) stopping fermentation in mid course (Beers & Coolers, edited by M. Moll, Intercept Ltd).

Among these methods, the reverse osmosis membrane method described in (1) may also remove non-alcoholic flavors and requires additional dealcoholization equipment to be introduced into the existing beer factories, thus resulting in enormous new costs of capital investment. It is therefore not easy to employ this method. Likewise, the distillation method may produce off-flavors due to heating. In relation to Method (2), there is a report using yeast *(Saccharomycoides Ludwigii)* incapable of fermenting maltose, the major sugar in wort (M.W.Brenner, Technical Quarterly, Master Brewers Association of the Americans, 17, 1980, 185-195). However, it is difficult to believe that this method enables the production of high quality low-alcohol beers because such yeast produces another unique flavor not derived from beer yeast.

In contrast, Method (3) in which the fermentation is stopped in mid course can use the current equipment in the existing beer factories and is advantageous in avoiding new capital investment. In relation to this method, it has been reported that the fermentation is stopped by cooling before proceeding in the standard fermentation process (Abriss der Bierbrauerei, edited by Ludwig Narziss, Ferdinand Enke Verlag). Also, JP 05-68528 A teaches the addition of α-glucosidase in the mashing step, whereby fermentable sugars in a saccharified solution are converted into non-fermentable sugars. However, it is difficult to believe that these reports make sufficient discussions on the prevention of off-flavor development.

Independently of these methods, other approaches are also proposed: (4) making a short contact between wort and yeast (F. Schur, European Brewery Convention, Proceeding of the 19^{th} Congress, 1983) and (5) mixing normal beer with low-alcohol beer prepared from wort at low extract concentration (G. W. Barrel, UK patent 2033424, 1980), etc. However, these approaches still suffer from the problem of a residual wort smell. Moreover, Approach (5) suffers from an additional problem in that this approach is less likely to obtain a manufacturing permit in Japan under the Liquor Tax Law.

Also, in relation to the reduction of off-flavors when using a fermentation stopping process to produce fermented beverages, for example, JP 2002-291465 A teaches the use of mutated yeast strains to control a diacetyl smell in Japanese rice wines of low-alcohol concentration.

However, regarding the production of fermented beverages through a fermentation stopping process that requires no capital investment, sufficient studies have not yet been made to obtain products with an excellent aroma by preventing off-flavors.

### DISCLOSURE OF THE INVENTION

The present invention aims to provide a method for producing fermented malt beverages with an excellent aroma by preventing the development of off-flavors, which are problems arising from the use of a fermentation stopping process to produce fermented beverages, particularly low-alcohol fermented malt beverages.

To overcome the problems stated above, the inventors have analyzed the types and thresholds of off-flavors in fermented beverages, as well as the mechanism of their development during a fermentation stopping process, and have further made extensive and intensive efforts to study the effects of components contained in wort or fermenting wort on the development of off-flavors during the fermentation stopping process.

As a result, they have found that among off-flavors eliminated in cases where fermentation is continued to the endpoint (e.g., beer production), sulfur and diacetyl smells would develop beyond their thresholds in a process where fermentation is stopped in mid course, and also have found that if these two smells are prevented from developing, it is possible to obtain fermented beverages with a pleasant aroma even using a fermentation stopping process. To this end, the inventors have found that the development of sulfur smell can be reduced when adjusting the L-methionine concentration in wort or fermenting wort, while the diacetyl smell can be reduced when adjusting the free amino nitrogen level (FAN level) in wort or fermenting wort. As used herein, the term "free amino nitrogen level (FAN level)" is meant to the total amount of free α-amino groups.

As previously known, the sulfur smell can be reduced by carbon dioxide bubbling, but this technique requires new capital investment and results in high investment costs. Likewise, the development of diacetyl smell is known to be prevented by suppressing yeast growth under conditions of low temperature and high pressure, but malt beverages produced by this technique are more likely to have residual wort smell.

The fermented beverages obtainable by the method of the present invention are characterized by preventing off-flavors such as sulfur and diacetyl smells and by having an excellent aroma, and are also advantageous in sharing the same equipment with beers.

### BRIEF DESCRIPTION OF DRAWINGS

Figure 1 shows changes in hydrogen sulfide concentration during fermentation using bottom fermenting yeast.
Figure 2 shows changes in hydrogen sulfide concentration during fermentation using each strain of top fermenting yeast.
Figure 3 shows changes in L-methionine and hydrogen sulfide concentrations during fermentation when using wort with a L-methionine concentration of 0.09 mM.
Figure 4 shows changes in L-methionine and hydrogen sulfide concentrations during fermentation when using wort with a L-methionine concentration of 0.14 mM.
Figure 5 shows changes in L-methionine and hydrogen sulfide concentrations during fermentation when using wort with a L-methionine concentration of 0.19 mM.
Figure 6 shows changes in hydrogen sulfide concentration during fermentation when using wort with a L-methionine concentration of 5 mM.
Figure 7 shows changes in L-valine concentration during fermentation when wort with various FAN levels are used for fermentation with yeast SH-1726.

### BEST MODE FOR CARRYING OUT THE INVENTION

The present invention will be described in more detail below.

The term "fermented beverage" as used herein is intended to mean a beverage produced via a fermentation step where wort obtained by saccharification of grain (e.g., malt, barley, rice, corn) is fermented with yeast. Examples include beers, sparkling liquors, low-alcohol fermented malt beverages, as well as beer-tasting beverages produced without using malt as a source material of wort.

The term "fermented malt beverage" as used herein is intended to mean a beverage produced via a fermentation step where wort obtained by saccharification of malt and other grain (e.g., barley, rice, corn) is fermented with yeast. Examples include beers, sparkling liquors, and low-alcohol fermented malt beverages.

The term "wort" as used herein is intended to mean a liquid before being provided for the fermentation step. Namely, it means the above-mentioned wort obtained by saccharification of grain (e.g., malt, barley, rice, corn), which may further be supplemented with source materials such as starch syrup and water, if necessary. The term "fermenting wort" as used herein is intended to mean a liquid prepared by adding yeast cells to such wort.

The term "fermentation stopping process" as used herein is intended to mean a process in which the fermentation is stopped during the fermentation step under conditions where yeast-assimilable sugars still remain. The fermentation may be stopped, e.g., by removing yeast cells or by rapidly cooling the fermenting wort. This method can be applied to all fermented beverages.

The present invention enables the reduction of off-flavor development that should be noted when stopping yeast fermentation in mid course. Thus, the present invention provides a useful technique for, among fermented beverages, those obtained through a fermentation stopping process.

Among fermented beverages, those produced using malt or the like as a source material are called fermented malt beverages, including beers and sparkling liquors. Under the Japanese Liquor Tax Law, fermented malt beverages containing 1% or more alcohol are categorized as alcoholic drinks; and hence fermented malt beverages containing less than 1% alcohol are outside the scope of alcoholic drinks. The term "low-alcohol beer" as used herein is intended to mean a fermented malt beverage containing less than 1% alcohol. Preferably, the alcohol content is 0.1% to less than 1%. Low-alcohol beers are also called non-alcoholic beers or alcohol-free beers.

Although the method of the present invention can be used to produce fermented beverages or fermented malt beverages at various alcohol concentrations through a fermentation stopping process, it is particularly preferred for use in producing fermented beverages with use of wort prepared from grain source materials. Among them, the method of the present invention can be preferably used for malt-based fermented malt beverages. Alternatively, the method of the present invention can also be used for beer-tasting beverages with use of malt-free wort.

Although there is no particular limitation on the alcohol concentration of beverages, the method of the present invention may be used for fermented malt beverages containing up to 20% alcohol by taking into account the alcohol tolerance of yeast cells. In the case of fermented malt beverages, the alcohol concentration is desirably 2% or less. Above all, the method of the present invention can be preferably used to produce low-alcohol fermented malt beverages having an alcohol concentration of 1% or less.

The term "off-flavor" as used herein is intended to mean an unpleasant odor in fermented beverages and also called, e.g., an unpleasant smell, an immature smell or an offensive smell. There are a wide variety of off-flavors in fermented beverages depending on the type of fermented beverage and the process used for production. Examples include organic acid-derived smells, various ester smells, as well as sulfur and diacetyl smells. The type of off-flavor to be noted in the production of fermented beverages will vary depending on the type of beverage and the process used for production.

For example, among off-flavors eliminated in cases where fermentation is continued to the endpoint (e.g., beer production), sulfur and diacetyl smells have been found to develop beyond their thresholds in fermented malt beverages when produced through a process where fermentation is stopped in mid course.

The sulfur smell in fermented beverages results from hydrogen sulfide, and the concentration of hydrogen sulfide in the beverages is desirably 3 ppb or less.

Hydrogen sulfide generated during fermentation is known to be closely related to yeast metabolism in sulfur-containing amino acid (e.g., L-methionine) production (Metabolic Maps, edited by the Japanese Biochemical Society, Tokyo Kagaku-dojin Publishing Company, INC, 143). In principle, sulfate ions in fermenting wort are taken up by yeast cells as their sulfur source and reduced into S²⁻. Although S²⁻ is partially released from the cells as hydrogen sulfide, it is taken up by the cells in response to yeast budding and used in synthesizing sulfur-containing amino acids such as L-cysteine and L-methionine, or alternatively, released from the cells as sulfur dioxide.

Thus, when fermentation is controlled to avoid the depletion of L-methionine contained in fermenting wort, it is possible to prevent the above hydrogen sulfide-generating metabolism from functioning.

Namely, in the present invention, it is important to adjust the L-methionine concentration in fermenting wort to the level at which the L-methionine biosynthetic system is inhibited throughout the fermentation step. To this end, fermenting wort may be supplemented with additional L-methionine at any time during the fermentationstep, or wort may be adapted to adjust the concentration of L-methionine. In the latter case, wort may be prepared such that, by the time the fermentation is stopped, the L-methionine concentration is maintained at a level higher than that required for yeast cells to drive the L-methionine biosynthetic system in response to the lack of L-methionine. In controlling the L-methionine concentration in wort, the L-methionine concentration will vary depending on the progress degree of fermentation, i.e., the intended alcohol concentration. For example, in the case of low-alcohol beers, the fermentation may be stopped at an alcohol concentration less than 1%. To obtain products of an alcohol concentration near 1%, the L-methionine concentration in wort is preferably 0.14 mM or more. In the case of beverages with lower alcohol concentrations (e.g., 0.5% or less), the L-methionine concentration in wort may be slightly lower, but desirably at least 0.09 mM or more. In controlling the L-methionine concentration in wort, the upper limit of the L-methionine concentration is not limited in any way as long as the fermentation step is not adversely affected. In view of costs and influences on product aroma, the upper limit may be 5 mM or less, and more preferably 1 mM or less, by way of example.

The diacetyl smell in fermented beverages is a typical unpleasant smell and also called an immature smell in beers. The diacetyl smell results from diacetyl and 2,3-pentanedione, whose sensory threshold in beer is said to be about 0.1 ppm and 1 ppm, respectively. These substances are intermediate metabolites of amino acid production (L-isoleucine, L-valine, L-leucine) in yeast cells. Diacetyl and 2,3-pentanedione generated during fermentation are rapidly taken up by yeast cells and do not substantially remain in fermenting wort. Thus, fermenting wort is almost free from both substances, but their precursors, α-acetolactic acid and α-aceto-α-hydroxybutyric acid, are present in fermenting wort. These precursors, if remaining in beers after filtration, are converted into diacetyl and 2,3-pentanedione via oxidative decarboxylation. For this reason, to prevent diacetyl and 2,3-pentanedione, their precursors are also required to be considered. These four compounds are collectively defined as the total vicinal-diketone (T-VDK) and are desired to be maintained at a level less than 0.1 ppm, their acceptable limit for fermented beverages.

T-VDK is maintained at a low level as long as yeast cells take up L-valine contained in fermenting wort. The amount of L-valine uptake is known to be affected by the presence of other amino acids including L-isoleucine (K Nakatani, Technical Quarterly, Master Brewers Association of the Americans, 21, 1984, 73 175). The inventors have made further attempts to control the free amino nitrogen level (FAN level) in wort or fermenting wort, so that L-valine biosynthesis in yeast cells is inhibited and the level of T-VDK is reduced.

The FAN level, which is equivalent to the total amount of free α-amino groups, will affect L-valine uptake by yeast cells. Namely, a lower FAN level leads to the depletion of L-valine per se, while a higher FAN level results in inhibition of L-valine uptake because other amino acids in abundance are preferentially taken up. In the present invention, it is therefore important to adjust the FAN level in wort and fermenting wort in such a manner as to not drive the L-valine biosynthetic system in yeast cells in response to the lack of L-valine and as to not inhibit L-valine uptake by yeast cells.

In controlling the FAN level in wort, the FAN level in beverages is 2.5 to 20 mg/100 ml, more preferably 5 to 20 mg/100 ml, but it may be adjusted according to the intended alcohol concentration. For example, in the case of low-alcohol beers, the FAN level in wort is preferably 10 mg/100 ml to 20 mg/100 ml because the fermentation is stopped at an alcohol concentration less than 1%, preferably near 1%.

The FAN level in wort may be controlled by adjusting the type or amount of grain-derived source material (e.g., malt). For example, since malt contains various amino acids, the FAN level increases when the amount of malt is increased. In contrast, the FAN level decreases when the amounts of secondary source materials, starch syrup and water, are higher.

The FAN level may also be controlled by the degree of protein decomposition during the mashing step. Protein decomposition during the mashing step may be achieved by adjusting pH, temperature or time, etc. For example, the temperature range where protein decomposition is accelerated is 45°C to 60°C, while deactivation will occur at about 80°C. In particular, low-molecular nitrogen compounds (FAN level) are increased in the range of 45°C to 50°C. The degree of protein decomposition will also depend on the reaction time. Moreover, protein decomposition is also affected by pH and hence accelerated by performing the mashing step at pH 5 to 6. To this end, for example, various acids may be added for pH adjustment.

On the other hand, the L-valine concentration in fermenting wort may be adjusted in such a manner as to not drive the L-valine biosynthetic system in yeast cells in response to the lack of L-valine. For example, the L-valine concentration may be 0.1 to 10 mM, but desirably 0.2 to 2 mM in view of costs and influences on a product aroma. The valine concentration in fermenting wort may be adjusted by adjusting the type or amount of grain-derived source material (e.g., malt). Alternatively, it may be adjusted by addition of L-valine to wort or fermenting wort.

Yeast strains used in the present invention may be selected without any restrictions as appropriate for the type of product, the intended aroma and fermentation conditions, etc. It should be noted that yeast strains which are extremely likely to produce sulfur and diacetyl smells (the problem to be solved by the present invention) should be avoided. In this respect, yeast strains having a lower capacity for sulfate ion uptake appear to produce less hydrogen sulfide and may be preferred for use in the present invention. Among yeast strains used for fermented malt beverages including beers, yeast strains of *Saccharomyces cerevisiae* have the property of floating to the top together with carbon dioxide bubbles generated during fermentation and then settling to the bottom after a period of time, and so are called top fermenting yeast. On the other hand, yeast strains of *Saccharomyces pastriunus* (or also called *Saccharomyces carlsbergensis*) have the property of fermenting without floating to the top during fermentation and then settling after completion of fermentation, and so are called bottom fermenting yeast.

Since top fermenting yeast tends to produce less hydrogen sulfide than bottom fermenting yeast, top fermenting yeast may be preferred for use in the present invention. Among them, low hydrogen sulfide-producing yeast and low T-VDK-producing yeast may be preferred for use. Examples include strains of top fermenting yeast *Saccharomyces cerevisiae* such as NCYC-229 (purchased from the NATIONAL COLLECTION OF YEAST CULTURES), NCYC-401 (purchased from the NATIONAL COLLECTION OF YEAST CULTURES), Weihenstephan-184 (purchased from the Fachhochschle Weihenstephan), SH-387 (International Accession No. FERM BP-08541), SH-1059 (International Accession No. FERM BP-08542) and SH-1726 (International Accession No. FERM BP-08543), each of which may be preferred for use.

The fermenting wort obtained by stopping the fermentation may be supplemented with additional materials such as colorants, antioxidants, acidulants and flavorings, as needed, according to standard techniques. Alternatively, the fermenting wort may also be adjusted by the reverse osmosis membrane method or by dilution with water or other solvents to give the intended alcohol concentration or aroma, if necessary. The fermented malt beverages thus obtained may be filled into containers such as bottles and cans.

### EXAMPLES

The present invention will be further described in more detail in the following examples, which are not intended to limit the scope of the invention.

### Example 1: Reduction of hydrogen sulfide generation by using top fermenting yeasts

Examination was performed to study the effects of using top fermenting yeast and bottom fermenting yeast on hydrogen sulfide generation.

The ratio of source materials malt and starch syrup used for wort preparation was set to 60:40, and pilot-scale brewing equipment was used to perform the mashing step under mashing conditions of 50°C for 30 minutes and 72°C for 60 minutes, thereby preparing wort with a sugar content of 10%. Yeast cells of each strain were added to give a viable cell density of 10 × 10⁶ cells/ml for each case. The strains used as top fermenting yeast were NCYC-229 (purchased from the NATIONAL COLLECTION OF YEAST CULTURES), NCYC-401 (purchased from the NATIONAL COLLECTION OF YEAST CULTURES), Weihenstephan-184 (purchased from the Fachhochschle Weihenstephan), SH-387 (International Accession No. FERM BP-08541), SH-1059 (International Accession No. FERM BP-08542) and SH-1726 (International Accession No. FERM BP-08543). The strain used as bottom fermenting yeast was Weihenstephan-34 (purchased from the Fachhochschle Weihenstephan).

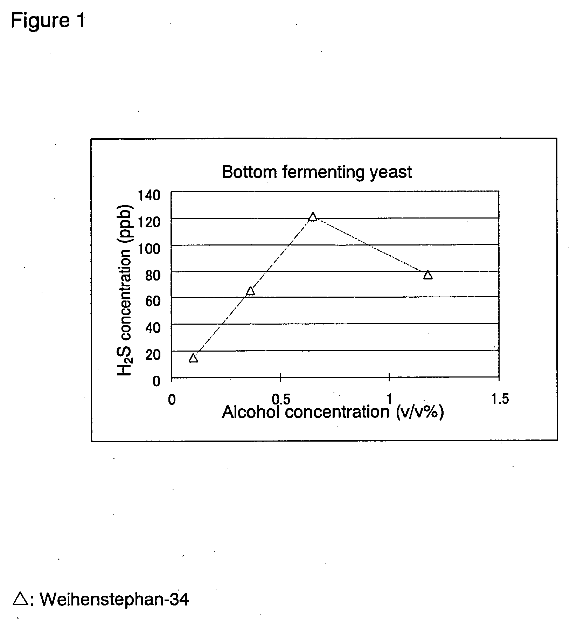

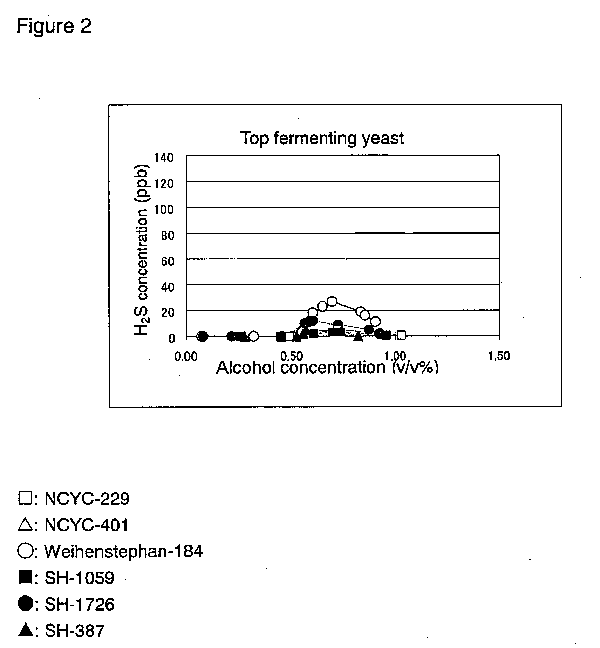

When compared to the bottom fermenting yeast strain Weihenstephan-34 (Figure 1), the top fermenting yeast strains NCYC-229, NCYC-401, Weihenstephan-184, SH-387, SH-1059 and SH-1726 resulted in lower hydrogen sulfide generation (Figure 2). Thus, top fermenting yeasts were shown to be preferred for use in producing low-alcohol malt beverages through a fermentation stopping process.

### Example 2: Reduction of hydrogen sulfide generation by controlling L-methionine concentration

Examination was performed to study the effects of L-methionine concentrations on hydrogen sulfide generation and sulfur smell.

The ratio of source materials malt and starch syrup used for wort preparation was set to 60:40, and pilot-scale brewing equipment was used to perform the mashing step under mashing conditions of 50°C for 30 minutes and 72°C for 60 minutes, thereby preparing wort with a sugar content of 10%. The resulting wort was measured to have a L-methionine concentration of 0.09 mM. To this wort, appropriate amounts of L-methionine were added to prepare wort (70 L each) at four levels of L-methionine concentration: 0.09 mM, 0.14 mM, 0.19 mM and 5.0 mM.

Each wort was supplemented with yeast to give a viable cell density of 10 × 10⁶ cells/ml. The yeast used was a strain of *Saccharomyces cerevisiae* (Weihenstephan-184). Fermentation was performed at a temperature of 15°C for about 1 day. Each fermenting wort was sampled over time and measured for L-methionine and hydrogen sulfide concentrations. At the point yielding about 1% alcohol concentration (about 2.4% alcohol concentration for the sample having a L-methionine concentration of 5.0 mM), each fermenting wort was rapidly cooled to around 0°C to stop the fermentation. Subsequently, yeast cells were removed by filtration and the resulting solutions were filled into bottles.

To measure the L-methionine concentration for each sugar solution and each fermenting wort, each amino acids was separated using an ion exchange resin, reacted with ninhydrin in a thermostatic reaction column, and then measured with a high speed amino acid analyzer (Model 8800, Hitachi Ltd., Japan) used to detect the degree of color development.

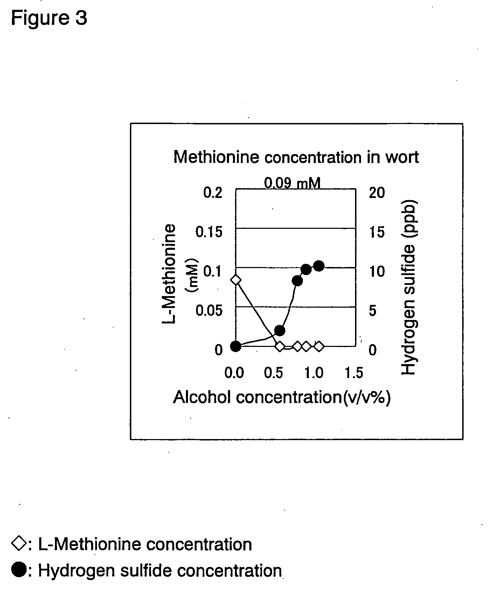

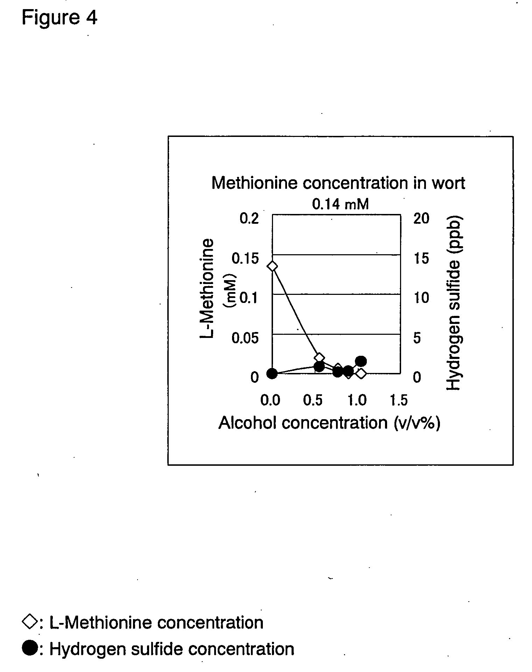

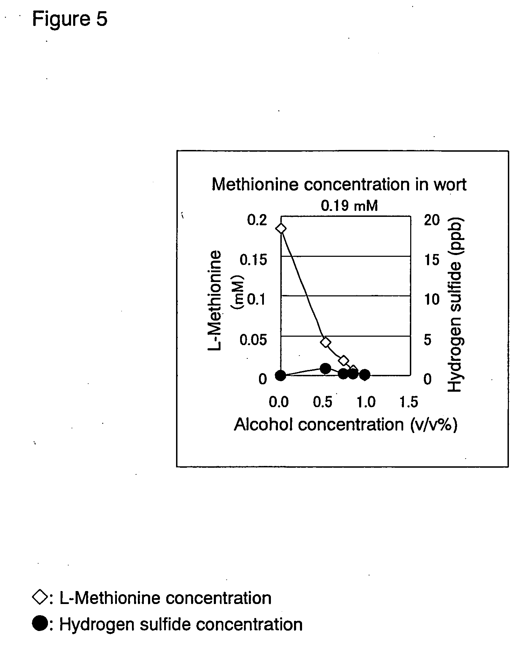

Figures 3 to 5 each show changes in L-methionine and hydrogen sulfide concentrations at the respective levels of L-methionine addition. In the sample having a reduced L-methionine concentration in its fermenting wort, hydrogen sulfide was generated (Figure 3). In contrast, in the sample having a L-methionine concentration of 0.14 mM (Figure 4) or 0.19 mM (Figure 5), the generation of hydrogen sulfide was prevented.

Moreover, the sulfur smell was examined by a sensory test. The samples obtained at the point yielding about 1% alcohol concentration were tested by five expert panelists using a scoring method on a three-point scale (0 = not detectable, 1 = slightly detectable, 2 = detectable) to calculate an average score for each sample. The sample temperature was set to about 5°C.

Table 1 shows the results obtained. In relation to the samples obtained at the point yielding about 1% alcohol concentration, the sample fermented at 0.09 mM L-methionine concentration in its wort was evaluated to have a detectable sulfur smell. In contrast, no sulfur smell was detected in the sample fermented at 0.14 or 0.19 mM L-methionine concentration and also containing residual L-methionine in itswort.

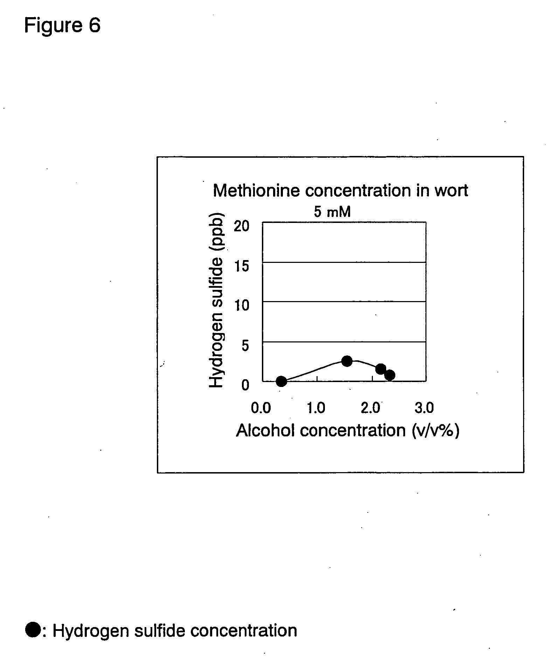

Likewise, Figure 6 shows changes in hydrogen sulfide concentration for the sample fermented at 5.0 mM L-methionine concentration in itswort. When the L-methionine concentration was increased up to 5.0 mM, the generation of hydrogen sulfide could be prevented even at the point where the alcohol concentration exceeded 2%.

These results confirmed that the presence of L-methionine in fermenting wort allowed prevention of sulfate ion uptake by yeast cells and hydrogen sulfide generation.

Also, when the fermentation is to be stopped at the point yielding about 1% alcohol concentration, it is shown that wort having a L-methionine concentration of at least 0.14 mM or more will be sufficient for use. Likewise, when the fermentation is to be stopped at the point yielding about 0.5% alcohol concentration, the L-methionine concentration in wort may be set to 0.09 mM or more (Figure 3). When the fermentation is to be stopped at the point yielding 2% alcohol concentration, the L-methionine concentration in wort may be set to 5 mM (Figure 6). These findings therefore indicate that the technique of the present invention allows prevention of sulfur smell when the L-methionine concentration in wort is appropriately adjusted according to the intended alcohol concentration.

**Table 1**

| Methionine concentration in wort (mM) | Sensory score for sulfur smell |
|---|---|
| 0.09 | 1.8 |
| 0.14 | 0.4 |
| 0.19 | 0 |

### Example 3: Reduction of total vicinal-diketone generation by optimizing free amino nitrogen level

Examination was performed to study the effects of free amino nitrogen levels (FAN levels) on total vicinal-diketone (T-VDK) generation or diacetyl smell.

The amount of source material malt used for wort preparation was varied to prepare four varieties of wort. Namely, the ratio of malt and starch syrup was set to 100:0, 80:20, 60:40 and 40:60%. Pilot-scale brewing equipment was used to perform the mashing step under conditions of 50°C for 30 minutes and 72°C for 60 minutes, thereby preparing wort samples (70 L each) with a sugar content of 10% at four levels of free amino nitrogen (FAN): 25, 20, 15 and 10 (mg/100 ml). Each of them was used as wort. The FAN level was measured by the TNBS method (Methods of Analysis of the ASBC (1987), Method Beer-31).

The yeasts used were top fermenting yeast (SH-1726) and bottom fermenting yeast (Weihenstephan-34).

Each wort was supplemented with each yeast strain to give a viable cell density of 10 × 10⁶ cells/ml and fermented at a temperature of 15°C for about 1 day. Each fermenting wort was sampled over time and measured for L-valine concentration and T-VDK level. At the point yielding about 1% alcohol concentration, each fermenting wort was rapidly cooled to around 0°C to stop the fermentation. Subsequently, yeast cells were removed by filtration and the resulting solutions were filled into bottles.

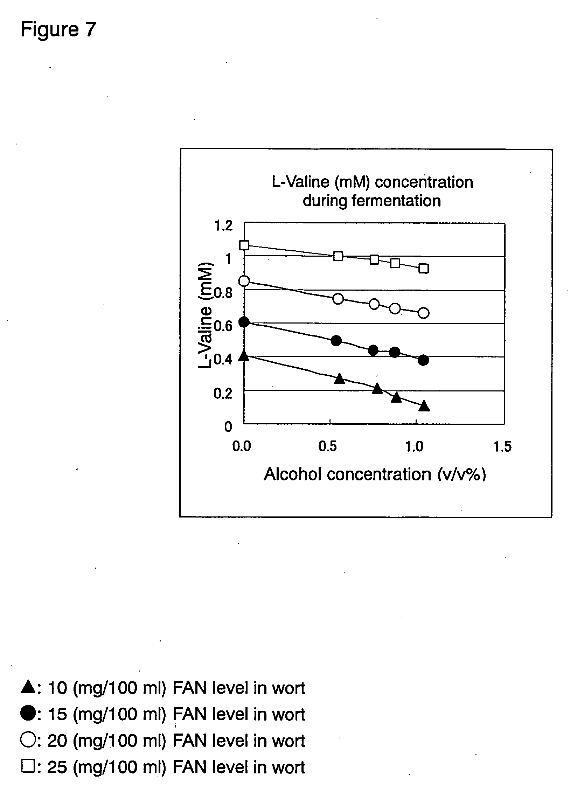

Figure 7 shows changes in L-valine concentration in fermenting wort when wort with various FAN levels are used for fermentation with top fermenting yeast (SH-1726). All the samples showed a time-dependent reduction of L-valine concentration. In particular, the wort with a low FAN level (10 mg/100 ml) showed a reduction of L-valine concentration to around 0.1 mM at the point yielding 1.0% alcohol concentration.

At each FAN level in the wort, the samples obtained at the point yielding about 1.0% alcohol concentration were measured for total vicinal-diketone concentration (T-VDK concentration) and tested by a sensory test. The T-VDK concentration was measured by colorimetry through direct distillation of fermenting wort after removal of yeast cells (Methods of Analysis of the ASBC (1987), Method Beer-25A). The sensory test for diacetyl smell evaluation was performed by five expert panelists using a scoring method on a three-point scale (0 = not detectable, 1 = slightly detectable, 2 = detectable) to calculate an average score for each sample. The sample temperature was set to about 5°C.

Table 2 shows the results obtained using the yeast strain SH-1726. The wort with 15 mg/100 ml FAN level had a lower T-VDK concentration than the other wort and produced good results in the sensory test.

**Table 2**

| FAN level in wort (mg/100 ml) | T-VDK concentration (ppm) | Sensory score for diacetyl smell |
|---|---|---|
| 10 | 0.08 | 0.4 |
| 15 | 0.06 | 0.2 |
| 20 | 0.09 | 0.4 |
| 25 | 0.12 | 1.4 |

In contrast, the sample whose wort had a low FAN level (10 mg/100 ml) showed a slight increase in T-VDK concentration when compared to the wort with 15 mg/100 ml FAN level, but produced good results in the sensory test. Since the level of T-VDK will increase with the decrease in L-valine uptake by yeast cells, sufficient L-valine uptake could not occur in this wort because of its reduced L-valine concentration. However, the threshold of T-VDK was around 0.10 ppm and hence the effect of diacetyl smell on sensory properties was negligible.

Moreover, the samples whose wort had high FAN levels (20 to 25 mg/100 ml) also showed an increase in T-VDK concentration. Among them, the wort with the highest FAN level (25 mg/100 ml) also produced poor results in the sensory test. Although this wort retained a sufficient amount of L-valine, the presence of other amino acids would cause the inhibition of L-valine uptake. Particularly in the wortwith 25 mg/100 ml FAN level, the diacetyl smell would develop to the extent of affecting sensory properties.

Next, in relation to the test using bottom fermenting yeast strain Weihenstephan-34, Table 3 shows the results of T-VDK measurement.

**Table 3**

| FAN level in wort (mg/100 ml) | T-VDK concentration (ppm) | Sensory score for diacetyl smell |
|---|---|---|
| 10 | 0.41 | 1.4 |
| 15 | 0.45 | 1.8 |
| 20 | 0.50 | 1.8 |
| 25 | 0.52 | 2.0 |

The T-VDK concentration varied depending on the FAN level contained in the wort. Namely, the wort with the lowest FAN level (10 mg/100 ml) showed the lowest T-VDK concentration, while the wort with the highest FAN level (25 mg/100 ml) showed the highest T-VDK concentration. This is because the presence of other amino acids would promote the inhibition of L-valine uptake.

The bottom fermenting yeast used in this test resulted in a higher T-VDK concentration than the yeast strain SH-1726 and was not optimal for use in producing low-alcohol fermented beverages. However, it was found that the level of T-VDK could be controlled when the FAN value was controlled, as shown above.

These results confirmed that both the T-VDK level and the diacetyl smell could be prevented by adjusting the FAN level in such a manner as to not drive the L-valine biosynthetic system in yeast cells in response to the lack of L-valine and as to not inhibit L-valine uptake by yeast cells. Also, a FAN level between 10 and 20 mg/100 ml was found to be appropriate for stopping the fermentation at the point yielding up to about 1% alcohol concentration.

As described above, the technique of the present invention allows prevention of diacetyl smell when wort is adjusted to have an appropriate FAN level according to the intended alcohol concentration.

### Example 4: Production of low-alcohol beers

Low-alcohol beers were produced with or without adjusting the L-methionine concentration and the FAN level.

Namely, three beverages were produced under the following conditions: only adjusting the L-methionine concentration without adjusting the FAN level in wort (Control Product 1); adjusting the FAN level in wort without adjusting the L-methionine concentration (Control Product 2); and adjusting both the L-methionine concentration and the FAN level in wort (Inventive Product 1).

Pilot-scale brewing equipment was used to prepare wort with a sugar content of 10% under the same mashing conditions as used in Example 1. At that time, the FAN level was adjusted by the ratio of source materials malt and starch syrup used for wort preparation. Namely, the ratio of malt and starch syrup was set to 100:0 (Control Product 1) or 60:40 (Control Product 2 and Inventive Product 1). These products were measured for their FAN level, indicating that Control Product 1 had a FAN level of 25 mg/100 ml, while Control Product 2 and Inventive Product 1 had a FAN level of 15 mg/100 ml, which was within the optimum concentration range. The FAN level was measured as described above.

Likewise, the L-methionine concentration in wort was 0.17 mM in Control Product 1 and 0.10 mM in Control Product 2 and Inventive Product 1. Inventive Product 1 was then supplemented with additional L-methionine to adjust its L-methionine concentration to 0.2 mM, which was within the optimum concentration range. Each of them was used as wort to perform fermentation. The L-methionine concentration was measured as described above.

Each wort was supplemented with yeast (SH-1726) to give a viable cell density of 10 × 10⁶ cells/ml and fermented at a temperature of 15°C for about 1 day, followed by cold storage and removal of yeast cells by filtration to produce low-alcohol beers having an alcohol content of 0.80% to 0.90%. The resulting low-alcohol beers were filled into bottles.

The resulting three low-alcohol beverages were measured for their hydrogen sulfide concentration, T-VDK concentration, sulfur smell and diacetyl smell. They were also tested by a comprehensive sensory test. The hydrogen sulfide concentration, T-VDK concentration, sulfur smell and diacetyl smell were evaluated as described above. The comprehensive sensory test was performed by five expert panelists using a scoring method on a five-point scale (5 = good, 4 = relatively good, 3 = satisfactory, 2 = relatively poor, 1 = poor) to calculate an average score for each sample.

Table 4 shows the results obtained. Control Product 1 prepared by only adjusting the L-methionine concentration (without adjusting the FAN level in itswort) had a high T-VDK concentration and produced poor results in the evaluation of diacetyl smell. Likewise, Control Product 2 prepared by adjusting the FAN level in its wort(without adjusting the L-methionine concentration) had a high hydrogen sulfide concentration and produced poor results in the evaluation of sulfur smell.

**Table 4**

| | | Control Product 1 | Control Product 2 | Inventive Product 1 |
|---|---|---|---|---|
| Values for wort | Methionine concentration in wort (mM) | 0.17 | 0.1 | 0.2 |
| | FAN level in wort (mg/100 ml) | 25 | 15 | 15 |
| Measured values for beverages | Hydrogen sulfide concentration (ppb) | 15 | 82 | 0.3 |
| | T-VDK concentration (ppm) | 0.13 | 0.05 | 0.05 |
| Sensory scores for beverages | Comprehensive evaluation | 3.5 | 3 | 5.5 |
| | Sulfur smell | 0 | 2 | 0 |
| | Diacetyl smell | 1.6 | 0.2 | 0 |

In contrast, the hydrogen sulfide concentration and the T-VDK concentration were both low in Inventive Product 1 prepared by adjusting both the L-methionine concentration and the FAN level in its wort. This product also produced good results in the evaluation of both sulfur and diacetyl smells. Moreover, this product received a high score as a beverage in the comprehensive sensory test. These results indicated that the technique of the present invention was preferred for use in producing low-alcohol malt beverages through a fermentation stopping process.

### Example 5: Production of beers

By adjusting the L-methionine concentration and the FAN level, beers having alcohol concentrations of 0.5% (Inventive Product 2) and 2% (Inventive Product 3) were prepared through a fermentation stopping process.

Pilot-scale brewing equipment was used to prepare wort with a sugar content of 10% under the same mashing conditions as used in Example 1. At that time, the FAN level was adjusted by the ratio of source materials malt and starch syrup used for wort preparation. Namely, the ratio of malt and starch syrup was set to 60:40 (Inventive Products 2 and 3). These products were measured for their FAN level, indicating that Inventive Products 2 and 3 each had a FAN level of 15 mg/100 ml.

Likewise, the L-methionine concentration in wort was 0.10 mg/100 ml in both Inventive Products 2 and 3. Each wort was supplemented with additional L-methionine to 0.15 mM (Inventive Product 2) and 0.40 mg/100 ml (Inventive Product 3). Each of them was used as wort to perform fermentation.

Each wort was supplemented with yeast (SH-1726) to give a viable cell density of 10 × 10⁶ cells/ml and fermented at a temperature of 15°C for about 1 or 2 days, followed by cold storage and removal of yeast cells by filtration to produce beers having alcohol contents of 0.5% and 2%. The resulting beers were filled into bottles.

All the inventive products were almost free from both sulfur and diacetyl smells and had a good aroma.

### INDUSTRIAL APPLICABILITY

The present invention enables the production of fermented malt beverages with an excellent aroma by preventing the development of off-flavors, which are problems arising from the use of a fermentation stopping process to produce fermented beverages, particularly low-alcohol fermented malt beverages.

## Claims

1. A method for producing a fermented beverage with less sulfur smell through a fermentation stopping process, wherein L-methionine is added to wort or fermenting wort.

2. A method for producing a fermented beverage with less sulfur smell through a fermentation stopping process, wherein the L-methionine concentration in wort is 0.09 mM to 5 mM.

3. The method according to claim 2, wherein the wort is prepared from a grain source material.

4. The method according to claim 3, wherein the grain source material is malt.

5. A method for producing a fermented beverage with less sulfur smell through a fermentation stopping process, wherein L-methionine is prevented from being depleted during the fermentation.

6. A method for producing a fermented beverage with less sulfur smell through a fermentation stopping process, wherein the fermentation is stopped before the L-methionine concentration in fermenting wort becomes lower than 0.01 mM.

7. The method according to any one of claims 1 to 6, wherein the alcohol concentration is 2% or less.

8. A method for producing a low-alcohol beer or low-alcohol sparkling liquor with less sulfur smell through a fermentation stopping process where the fermentation is stopped at an alcohol concentration less than 1%, wherein the L-methionine concentration in wort is 0.09 mM to 5 mM.

9. A method for producing a fermented beverage with less diacetyl smell through a fermentation stopping process, wherein the free amino nitrogen level in wort or fermenting wort is controlled.

10. The method according to claim 9, wherein the free amino nitrogen level in wort is 10 mg/100 ml to 20 mg/100 ml.

11. The method according to claim 9, wherein the free amino nitrogen level in fermenting wort is adjusted to give an L-valine concentration of 0.1 to 10 mM.

12. The method according to claim 9 or 10, wherein the free amino nitrogen level in wort is controlled by adjusting at least one parameter selected from the group consisting of the type or ratio of grain source material, the pH, temperature or time of a mashing step, and a dilution factor.

13. The method according to claim 12, wherein the grain source material is malt.

14. The method according to any one of claims 9 to 13, wherein the alcohol concentration is 2% or less.

15. A method for producing a low-alcohol beer or low-alcohol sparkling liquor with less diacetyl smell through a fermentation stopping process where the fermentation is stopped at an alcohol concentration less than 1%, wherein the free amino nitrogen level in wort is 10 mg/100 ml to 20 mg/100 ml.

16. A method for producing a low-alcohol beer or low-alcohol sparkling liquor with less diacetyl smell through a fermentation stopping process where the fermentation is stopped at an alcohol concentration of 0.5% or less, wherein the free amino nitrogen level in wort is 2.5 mg/100 ml to 20 mg/100 ml.

17. A method for producing a fermented beverage with less sulfur and diacetyl smells through a fermentation stopping process, wherein L-methionine is added to wort or fermenting wort and wherein the free amino nitrogen level in the wort or fermenting wort is controlled.

18. The method according to claim 17, wherein the L-methionine concentration in wort is 0.09 mM to 5 mM and wherein the free amino nitrogen level in the wort is 10 mg/100 ml to 20 mg/100 ml.

19. The method according to claim 17, wherein the L-methionine concentration in wort is 0.09 mM to 5 mM and wherein the free amino nitrogen level in fermenting wort is adjusted to give an L-valine concentration of 0.1 to 10 mM.

20. The method according to claim 17, wherein the L-methionine concentration in wort is 0.09 mM to 5 mM and wherein the free amino nitrogen level in the wort is controlled by adjusting at least one parameter selected from the group consisting of the type or amount of grain source material and the pH, temperature or time of a mashing step.

21. The method according to any one of claims 1 to 7, 9 to 14 and 17 to 20, wherein the fermented beverage is a low-alcohol fermented beverage.

22. The method according to claim 21, wherein the low-alcohol fermented beverage is a low-alcohol beer or a low-alcohol sparkling liquor.

23. The method according to any one of claims 1 to 22, wherein yeast has a lower capacity for sulfate ion uptake.

24. The method according to any one of claims 1 to 22, wherein yeast has a lower capacity for total vicinal-diketone (T-VDK) production.

25. The method according to any one of claims 1 to 24, wherein yeast is top fermenting yeast.

26. The method according to claim 25, wherein the yeast is *Saccharomyces cerevisiae*.

27. A fermented beverage with less off-flavor, which is obtainable by the method according to any one of claims 1 to 25.
